# EUROPÄISCHE PATENTSCHRIFT

(11) **EP 1 428 350 B1**
(45) Veröffentlichungstag und Bekanntmachung des Hinweises auf die Patenterteilung: **11.06.2008**
(21) Anmeldenummer: 02772061.4
(22) Anmeldetag: 18.09.2002
(51) Int. Cl.: H04L 12/24, H04L 12/56

(54) **VERFAHREN ZUR AUTOMATISIERTEN ERFASSUNG TOPOLOGISCHER DATEN EINES KOMMUNIKATIONSNETZES, VERMITTLUNGSKNOTEN**
METHOD FOR THE AUTOMATED RECORDING OF TOPOLOGICAL DATA OF A COMMUNICATIONS NETWORK, SWITCHING NODE, HEAD END, CONTROL PROGRAMME FOR SWITCHING NODE AND CONTROL PROGRAMME FOR HEAD END
PROCEDE POUR COLLECTER AUTOMATIQUEMENT DES DONNEES TOPOLOGIQUES D'UN RESEAU DE COMMUNICATION, NOEUD DE COMMUTATION, TETE DE RESEAU, PROGRAMME DE COMMANDE POUR NOEUD DE COMMUTATION ET PROGRAMME DE COMMANDE POUR TETE DE RESEAU

(30) Priorität: 21.09.2001 DE 10146550
(43) Veröffentlichungstag der Anmeldung: 16.06.2004
(73) Patentinhaber: Nokia Siemens Networks GmbH & Co. KG, 81541 München (DE)
(72) Erfinder: PEXA, Günther, 82237 Wörthsee (DE); RIEKEN, Manuel, 82234 Wessling (DE)
(86) Internationale Anmeldenummer: PCT/DE2002/003500
(87) Internationale Veröffentlichungsnummer: WO 2003/028291

(56) Entgegenhaltungen:
- US-A- 5 708 772
- US-A- 5 729 685
- US-A- 5 963 943
- KUI WU ET AL: "Location trace aided routing in mobile ad hoc networks" COMPUTER COMMUNICATIONS AND NETWORKS, 2000. PROCEEDINGS. NINTH INTERNATIONAL CONFERENCE ON LAS VEGAS, NV, USA 16-18 OCT. 2000, PISCATAWAY, NJ, USA,IEEE, US, 16. Oktober 2000 (2000-10-16), Seiten 354-359, XP010524531 ISBN: 0-7803-6494-5

## Beschreibung

Aus EP 0 930 743 A1 ist ein Verfahren zur Übertragung von Daten in einem Kommunikationsnetz bekannt, das eine Mehrzahl von Anschlußeinrichtungen aufweist. Die Anschlußleitungen sind über Verbindungsleitungen mit einer Kopfstelle des Kommunikationsnetzes verbunden. Für eine Übertragung von Daten von den Anschlußeinrichtungen zur Kopfstelle ist zumindest ein Rückkanal vorgesehen. Die Datenübertragungsrate im Rückkanal wird in Abhängigkeit der Übertragungsqualität durch Auswahl von Modulationsverfahren in den Anschlußeinrichtungen ausgewählt.

In EP 0 975 122 A1 ist ein Verfahren zum Ermitteln von Daten zum Erstellen eines Abbildes eines Kommunikationsnetzes beschrieben. Aus einer Überlagerung lokaler Sichten des Netzes, die an ausgewählten Vermittlungsknoten gewonnen werden, wird eine globale Sicht des Netzes generiert. Für jeden Vermittlungsknoten, an dem eine lokale Sicht gewonnen wird, ist eine Überwachungseinrichtung vorgesehen, die Verbindungsdaten zu über den jeweiligen Vermittlungsknoten geführte Verbindungen aufzeichnet. Anhand dieser statistischen Daten sind wahrscheinlichkeitsbehaftete Aussagen möglich, aus denen sich die jeweiligen lokalen Sichten des Netzes ableiten lassen. Die Überlagerung der lokalen Sichten des Netzes zu einer globalen Sicht ist verhältnismäßig aufwendig, da hierzu Kenntnis über die Lage der Vermittlungsknoten zueinander notwendig ist, an denen die einzelnen lokalen Sichten des Netzes gewonnen werden.

Der vorliegenden Erfindung liegt die Aufgabe zugrunde, ein vereinfachtes Verfahren zur automatisierten Erfassung topologischer Daten eines Kommunikationsnetzes sowie dazu geeigneter Vorrichtungen und Steuerungsprogramme anzugeben.

Diese Aufgabe wird erfindungsgemäß durch ein Verfahren mit den in Anspruch 1, einen Vermittlungsknoten mit den in Anspruch 9, eine Kopfstelle mit den in Anspruch 10, ein Steuerungsprogramm für einen Vermittlungsknoten mit den in Anspruch 11 und ein Steuerungsprogramm für eine Kopfstelle mit den in Anspruch 12 angegebenen Merkmalen gelöst. Vorteilhafte Ausgestaltungen des erfindungsgemäßen Verfahrens sind in den abhängigen Ansprüchen angegeben.

Ein wesentlicher Aspekt der vorliegenden Erfindung besteht darin, daß ein Senden einer Meldung mit zumindest einem Ergebnis einer Übertragungsqualtitätsmessung an eine Kopfstelle eines Kommunikationsnetzes zur gleichzeitigen Übermittlung von Informationen genutzt wird, die an einer Übermittlung der Meldung beteiligte Vermittlungsknoten kennzeichnen. Aus diesen Informationen ergeben sich topologische Daten, die einen Netzwerkpfad von einem durch eine Übertragungsqualtitätsmessung überwachten Vermittlungsknoten zur Kopstelle kennzeichnen. Hieraus ergibt sich eine besonders effiziente Methode einer automatisierten Erfassung topologischer Daten eines Kommunikationsnetzes, die eine Online-Aktualisierung eines topologischen Netzabbildes nach Änderungen der Netztopologie ermöglicht.

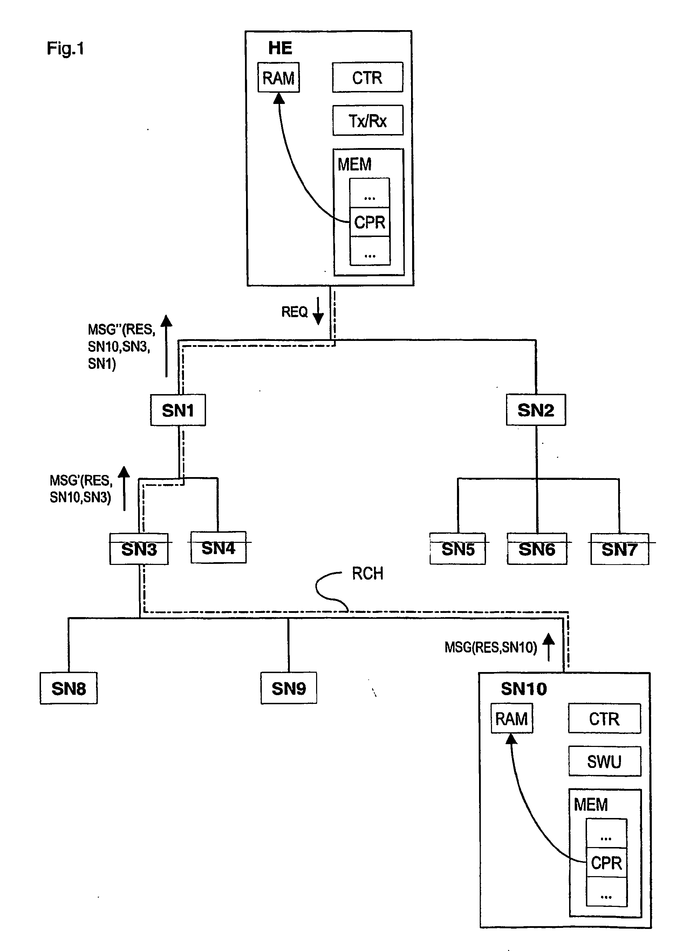

Die vorliegende Erfindung wird nachfolgend an einem Ausführungsbeispiel anhand der Zeichnung näher erläutert. Es zeigt
- Figur 1: ein Kommunikationsnetz, in dem die vorliegende Erfindung zur Anwendung kommt, und Signalflüsse im Kommunikationsnetz in schematischer Darstellung.

Das in Figur 1 dargestellte Kommunikationsnetz weist eine Kopfstelle HE und mehrere Vermittlungsknoten SN1-SN10 auf, die über Verbindungsleitungen mit der Kopfstelle HE verbunden sind. Eine Beschreibung der allgemeinen Funktion und Wirkungsweise einer Kopfstelle in einem Kommunikationsnetz ist der EP 0 930 743 A1 zu entnehmen.

Die Kopfstelle HE weist eine Sende-/Empfangseinrichtung Tx/Rx, eine Steuerungseinrichtung CTR für die Sende-/Empfangseinrichtung Tx/Rx, einen Arbeitsspeicher RAM und eine Speichereinrichtung MEM auf. In der Speichereinrichtung MEM der Kopfstelle HE ist unter anderem ein Steuerungsprogramm CPR für die Steuerungseinrichtung CTR der Kopfstelle HE abgespeichert. Wie durch den Pfeil in Figur 1 angedeutet, ist das Steuerungsprogramm CPR in den Arbeitsspeicher RAM der Kopfstelle HE ladbar.

Die Vermittlungsknoten SN1-SN10 haben für die folgenden Betrachtungen den selben Aufbau und die selbe Wirkungsweise. Der Aufbau und die Wirkungsweise der Vermittlungsknoten SN1-SN10 wird exemplarisch anhand des Vermittlungsknotens SN10 beschrieben, dessen Aufbau in Figur 1 detaillierter dargestellt ist. Der Vermittlungsknoten SN10 weist eine Durchschalteinrichtung SWU, eine Steuerungseinrichtung CTR für die Durchschalteinrichtung SWU, einen Arbeitsspeicher RAM und eine Speichereinrichtung MEM auf. In der Speichereinrichtung MEM des Vermittlungsknotens SN10 ist unter anderem ein Steuerungsprogramm CTR für die Steuerungseinrichtung CTR des Vermittlungsknotens SN10 abgespeichert. Wie durch den in Figur 1 dargestellten Pfeil angedeutet, ist das Steuerungsprogramm CPR in den Arbeitsspeicher RAM des Vermittlungsknotens SM10 ladbar.

Soll ein Vermittlungsknoten durch eine Übertragungsqualitätsmessung überwacht werden, so wird von der Kopfstelle HE eine Anforderung REQ an den zu überwachenden Vermittlungsknoten SN10 gesendet. Die Anforderung REQ zur Übermittlung eines Ergebnisses einer Übertragungsqualitätsmessung kann derart kodiert werden, daß sie nur durch den zu überwachenden Vermittlungsknoten SN10 dekodierbar ist. In diesem Fall ist es möglich, die Anforderung REQ an alle Vermittlungsknoten SN1-SN10 zu senden, wenn die Vermittlungsknoten SN1-SN10 derart konfiguriert sind, daß sie eine nicht dekodierbare Anforderung verwerfen. Insbesondere in Kommunikationsnetzen, in denen die Vermittlungsknoten SN1-SN10 als festgeschaltete Verzweigungsstellen oder Verstärker ausgebildet sind, ergibt sich aus dieser Vorgehensweise ein minimaler vermittlungstechnischer Aufwand zum Versenden einer Anforderung eines Ergebnisses einer Übertragungsqualitätsmessung.

Nach Empfang der Anforderung REQ durch den zu überwachenden Vermittlungsknoten SN10 wird dort beispielsweise ein Übertragungssignalpegel in Relation zu einem Sollwert ermittelt, oder es werden Laufzeitverzögerungen für Übertragungssignale ermittelt. Grundsätzlich sind beliebige Übertragungsqualitätsmessungen möglich. Nach Ermittlung eines Ergebnisses der Übertragungsqualitätsmessung wird von dem durch die Übertragungsqualitätsmessung überwachten Ermittlungsknoten SN10 eine Meldung MSG mit dem Ergebnis RES der Übertragungsqualitätsmessung an die Kopfstelle HE gesendet. Zusätzlich wird in die Meldung MSG eine den durch die Übertragungsqualitätsmessung überwachten Vermittlungsknoten SN10 kennzeichnende Information in die Meldung MSG eingefügt.

Ein Beispiel für eine den Vermittlungsknoten SN10 kennzeichnende Information ist sein Name. Alternativ dazu ist die Verwendung beliebiger Informationen möglich, die eine eindeutige Identifizierung des durch die Übertragungsqualitätsmessung überwachten Vermittlungsknoten SN10 innerhalb des Kommunikationsnetzes erlauben.

Bei Weiterleitung der Meldung MSG mit dem Übertragungsqualitätsmessergebnis RES durch weitere Vermittlungsknoten SN3, SN1 wird jeweils eine den weiterleitenden Vermittlungsknoten SN3, SN1 kennzeichnende Information in die Meldung MSG, MSG' eingefügt. Die den überwachten Vermittlungsknoten SN10 bzw. die weiterleitenden Vermittlungsknoten SN3, SN1 kennzeichnende Information wird an einer vordefinierten Stelle in die Meldung MSG, MSG' eingefügt. Beispielsweise wird die kennzeichnende Information entsprechend der Reihenfolge der Vermittlungsknoten SN10, SN3, SN1 entlang eines Netzwerkpfades jeweils am Anfang oder am Ende der Meldung MSG, MSG' eingefügt. Wesentlich ist, daß aus der jeweiligen Stelle einer kennzeichnenden Information innerhalb der Meldung MSG, MSG' die Reihenfolge eines Vermittlungsknotens entlang eines Netzwerkpfades eindeutig ableitbar ist.

Das Einfügen der Information, die einen Vermittlungsknoten als einen durch eine Übertragungsqualitätsmessung beobachteten Vermittlungsknoten bzw. als einen das Übertragungsqualitätsmessergebnis RES weiterleitenden Vermittlungsknoten kennzeichnet, in die Meldung MSG, MSG' mit dem Übertragungsqualitätsmessergebnis erfolgt auf Veranlassung durch das in den Arbeitsspeicher RAM des jeweiligen Vermittlungsknotens geladene Steuerungsprogramm CPR, wenn das Steuerungsprogramm CPR in einer Steuerungseinrichtung CTR eines Vermittlungsknotens abläuft.

Die Meldung MSG, MSG', MSG" mit dem Übertragungsqualitätsmessergebnis RES wird über einen Rückkanal RCH des Kommunikationsnetzes zur Kopfstelle HE übertragen. Bei Empfang der Meldung MSG" in der Kopfstelle wird die den überwachten Vermittlungsknoten SN10 und die den jeweils weiterleitenden Vermittlungsknoten SN3, SN1 kennzeichnende Information aus der Meldung MSG" ausgelesen und als einen Netzwerkpfad des Kommunikationsnetzes kennzeichnende topologische Daten in der Speichereinrichtung MEM der Kopfstelle HE abgespeichert. Das Auslesen und Abspeichern der den überwachten und der den jeweils weiterleitenden Vermittlungsknoten kennzeichnenden Information erfolgt auf Veranlassung durch ein in den Arbeitsspeicher RAM der Kopfstelle HE geladenes Steuerungsprogramm CPR, wenn das Steuerungsprogramm CPR in der Steuerungseinrichtung CTR der Kopfstelle HE abläuft.

Entsprechend einer bevorzugten Ausführungsform der vorliegenden Erfindung wird bei Einführung eines neuen Vermittlungsknotens in das Kommunikationsnetz für diesem Vermittlungsknoten automatisch ein Übertragungsqualitätsmessung durchgeführt. Hierdurch ist sichergestellt, daß ein in der Kopfstelle HE auf Basis der topologischen Daten abgespeichertes Netzabbild stets die aktuelle Netzwerktopologie repräsentiert. Das in der Kopfstelle HE abgespeichertes Netzabbild kann außerdem für Bewertungs- und Überwachungszwecke in grafischer Form an einer nicht näher dargestellten Benutzerschnittstelleneinrichtung dargestellt werden.

Ein Anwendungsgebiet für die vorliegende Erfindung ist eine automatische Generierung von Netzplänen für Kabelfernsehnetze, in denen Daten von der Kopfstelle HE an die Vermittlungsknoten SN1-SN10 verbindungsorientiert übertragen werden. Die Anwendung der vorliegenden Erfindung ist grundsätzlich für beliebige Kommunikationsnetze möglich, auch mit paketorientierter Datenübertragung.

Die Anwendung der vorliegenden Erfindung ist nicht auf das hier beschriebene Ausführungsbeispiel beschränkt.

## Patentansprüche

1. Verfahren zur automatisierten Erfassung topologischer Daten eines Kommunikationsnetzes mit einer Mehrzahl von Vermittlungsknoten, die mit einer Kopfstelle des Kommunikationsnetzes verbunden sind, bei dem
- bei Senden einer Meldung (MSG) mit zumindest einem Ergebnis (RES) einer Übertragungsqualitätsmessung von einem ersten durch die Übertragungsqualitätsmessung überwachten Vermittlungsknoten (SN10) an die Kopfstelle (HE) eine den ersten Vermittlungsknoten (SN10) kennzeichnende Information in die Meldung (MSG) eingefügt wird,
- bei Weiterleitung der Meldung (MSG, MSG') an die Kopfstelle (HE) durch zumindest einen zweiten Vermittlungsknoten (SN3, SN1) eine den zumindest einen zweiten Vermittlungsknoten (SN3, SN1) kennzeichnende Information in die Meldung (MSG, MSG') eingefügt wird,
- bei Empfang der Meldung (MSG") in der Kopfstelle (HE) die den ersten (SN10) und den zumindest einen zweiten Vermittlungsknoten (SN3, SN1) kennzeichnende Information aus der Meldung ausgelesen (MSG") und als einen Netzwerkpfad kennzeichnende topologische Daten abgespeichert werden.

2. Verfahren nach Anspruch 1,
**dadurch gekennzeichnet, daß** die den ersten Vermittlungsknoten (SN10) und/oder den zumindest einen zweiten Vermittlungsknoten kennzeichnende Information (SN3, SN1) an einer vordefinierten Stelle in die Meldung (MSG, MSG') eingefügt werden.

3. Verfahren nach einem der Ansprüche 1 oder 2,
**dadurch gekennzeichnet, daß** bei Einfügen eines neuen Vermittlungsknotens in das Kommunikationsnetz für diesen Vermittlungsknoten automatisch eine Übertragungsqualitätsmessung durchgeführt wird.

4. Verfahren nach einem der Ansprüche 1 oder 2,
**dadurch gekennzeichnet, daß** eine Übertragungsqualitätsmessung auf Veranlassung der Kopfstelle (HE) erfolgt.

5. Verfahren nach einem der Ansprüche 1 bis 4,
**dadurch gekennzeichnet, daß** die Meldung (MSG, MSG', MSG") über einen Rückkanal (RCH)) des Kommunikationsnetzes zur Kopfstelle (HE) übertragen wird.

6. Verfahren nach einem der Ansprüche 1 bis 5,
**dadurch gekennzeichnet, daß** der erste (SN10) und/oder der zumindest eine zweite Vermittlungsknoten (SN3, SN1) als festgeschaltete Verzweigungsstelle ausgebildet sind/ist.

7. Verfahren nach einem der Ansprüche 1 bis 6,
**dadurch gekennzeichnet, daß** bei einer Übertragungsqualitätsmessung in einem Vermittlungsknoten ein Übertragungssignalpegel in Relation zu einem Sollwert ermittelt wird.

8. Verfahren nach einem der Ansprüche 1 bis 7,
**dadurch gekennzeichnet, daß** bei einer Übertragungsqualitätsmessung in einem Vermittlungsknoten Laufzeitverzögerungen für ein Übertragungssignal ermittelt werden.

9. Vermittlungsknoten zur Durchführung des Verfahrens nach Anspruch 1 mit
- zumindest einer Durchschalteeinrichtung (SWU),
- zumindest einer Steuerungseinrichtung (CTR) für die zumindest eine Durchschalteeinrichtung (SWU) und
- zumindest einem Mittel zum Einfügen einer Information, die den Vermittlungsknoten (SN1-SN10) als einen ersten durch eine Übertragungsqualitätsmessung überwachten Vermittlungsknoten und/oder als zumindest einen zweiten das Übertragungsqualitätsmeßergebnis weiterleitenden Vermittlungsknoten kennzeichnet, in eine Meldung (MSG, MSG') mit dem Übertragungsqualitätsmeßergebnis (RES).

10. Kopfstelle zur Durchführung des Verfahrens nach Anspruch 1 mit
- zumindest einer Sende-/Empfangseinrichtung (Tx/Rx),
- zumindest einer Steuerungseinrichtung (CTR) für die zumindest eine Sende-/Empfangseinrichtung (Tx/Rx),
- zumindest einem Mittel zum Auslesen einer einen ersten durch eine Übertragungsqualitätsmessung überwachten Vermittlungsknoten (SN10) und einer zumindest einen zweiten das Übertragungsqualitätsmeßergebnis (RES) weiterleitenden Vermittlungsknoten (SN3, SN1) kennzeichnenden Information aus einer Meldung (MSG") mit dem Übertragungsqualitätsmeßergebnis (RES) und
- zumindest einem Mittel (MEM, RAM) zum Abspeichern der den ersten (SN10) und den zumindest einen zweiten Vermittlungsknoten (SN3, SN1) kennzeichnenden Information als einen Netzwerkpfad kennzeichnende topologische Daten.

11. Steuerungsprogramm für Vermittlungsknoten nach Anspruch 9, das in einen Arbeitsspeicher des Vermittlungsknotens ladbar ist und zumindest einen Softwarecodeabschnitt abweist,
- eine Information, die den Vermittlungsknoten (SN1-SN10) als einen ersten durch eine Übertragungsqualitätsmessung überwachten Vermittlungsknoten und/oder als zumindest einen zweiten das Übertragungsqualitätsmeßergebnis (RES) weiterleitenden Vermittlungsknoten kennzeichnet, in eine Meldung (MSG, MSG') mit dem Übertragungsqualitätsmeßergebnis (RES) eingefügt wird,
wenn das Steuerungsprogramm in einer Steuerungseinrichtung (CTR) des Vermittlungsknotens (SN1-SN10) abläuft.

12. Steuerungsprogramm für Kopfstelle nach Anspruch 10, das in einen Arbeitsspeicher der Kopfstelle ladbar ist und zumindest einen Softwarecodeabschnitt abweist, bei dessen Ausführung
- eine einen ersten (SN10) durch eine Übertragungsqualitätsmessung überwachten Vermittlungsknoten und eine zumindest einen zweiten das Übertragungsqualitätsmeßergebnis weiterleitenden Vermittlungsknoten (SN3, SN1) kennzeichnende Information aus einer Meldung (MSG") mit dem Übertragungsqualitätsmeßergebnis (RES) ausgelesen wird und
- die den ersten (SN10) und den zumindest einen zweiten Vermittlungsknoten (SN3, SN1) kennzeichnende Information als einen Netzwerkpfad kennzeichnende topologische Daten abgespeichert werden,
wenn das Steuerungsprogramm in einer Steuerungseinrichtung (CTR) der Kopfstelle (HE) abläuft.

## Claims

1. Method for the automated recording of topological data of a communications network comprising a plurality of switching nodes which are connected to a head end of the communications network, in which
- on sending a message (MSG) with at least one result (RES) of a transmission quality measurement from a first switching node (SN10) monitored by the transmission quality measurement to the head end (HE), an information item identifying the first switching node (SN10) is inserted into the message (MSG),
- on forwarding the message (MSG, MSG') to the head end (HE) by at least one second switching node (SN3, SN1), an information item identifying the at least one second switching node (SN3, SN1) is inserted into the message (MSG, MSG'),
- on reception of the message (MSG") in the head end (HE), the information item identifying the first switching node (SN10) and the at least one second switching node (SN3, SN1) is read out of the message (MSG") and stored as topological data identifying a network path.

2. Method according to Claim 1, **characterized in that** the information item identifying the first switching node (SN10) and/or the at least one second switching node (SN3, SN1) is inserted into the message (MSG, MSG') at a predefined position.

3. Method according to one of Claims 1 or 2, **characterized in that** when a new switching node is inserted into the communications network, a transmission quality measurement is automatically carried out for this switching node.

4. Method according to one of Claims 1 or 2, **characterized in that** a transmission quality measurement is taken on initiation of the head end (HE).

5. Method according to one of Claims 1 to 4, **characterized in that** the message (MSG, MSG', MSG") is transmitted to the head end (HE) via a return channel (RCH) of the communications network.

6. Method according to one of Claims 1 to 5, **characterized in that** the first switching node (SN10) and/or the at least one second switching node (SN3, SN1) is/are arranged as hard-wired branching point.

7. Method according to one of Claims 1 to 6, **characterized in that** during a transmission quality measurement in a switching node, a transmission signal level is determined in relation to a nominal value.

8. Method according to one of Claims 1 to 7, **characterized in that** during a transmission quality measurement in a switching node, propagation delays are determined for a transmission signal.

9. Switching node for carrying out the method according to Claim 1, comprising
- at least one switching unit (SWU),
- at least one control facility (CTR) for the at least one switching unit (SWU), and
- at least one means for inserting an information item which identifies the switching node (SN1-SN10) as a first switching node monitored by a transmission quality measurement and/or as at least one second switching node forwarding the transmission quality measurement result, into a message (MSG, MSG') with the transmission quality measurement result (RES).

10. Head end for carrying out the method according to Claim 1, comprising
- at least one transmitting/receiving facility (Tx/Rx),
- at least one control facility (CTR) for the at least one transmitting/receiving facility (Tx/Rx),
- at least one means for reading an information item identifying a first switching node (SN10) monitored by a transmission quality measurement and an information item identifying at least one second switching node (SN3, SN1) forwarding the transmission quality measurement result (RES) out of a message (MSG") with the transmission quality measurement result (RES), and
- at least one means (MEM, RAM) for storing the information item identifying the first switching node (SN10) and the at least one second switching node (SN3, SN1) as topological data identifying a network path.

11. Control program for switching nodes according to Claim 9, which can be loaded into a main memory of the switching node and has at least one software code section, on the execution of which
- an information item which identifies the switching node (SN1-SN10) as a first switching node monitored by a transmission quality measurement and/or as at least one second switching node forwarding the transmission quality measurement result (RES), is inserted into a message (MSG, MSG') with the transmission quality measurement result (RES),
when the control program is running in a control facility (CTR) of the switching node (SN1-SN10).

12. Control program for head end according to Claim 10, which can be loaded into a main memory of the head end and has at least one software code section, on the execution of which
- an information item identifying a first switching node (SN10) monitored by a transmission quality measurement and an information item identifying at least one second switching node (SN3, SN1) forwarding the transmission quality measurement result is read out of a message (MSG") with the transmission quality measurement result (RES), and
- the information item identifying the first switching node (SN10) and the at least one second switching node (SN3, SN1) is stored as topological data identifying a network path,
when the control program is running in a control facility (CTR) of the head end (HE).

## Revendications

1. Procédé pour l'enregistrement automatisé de données topologiques d'un réseau de communication comprenant une pluralité de noeuds de commutation, qui sont reliés à une tête du réseau de communication, dans lequel
- lors de l'envoi d'un message (MSG) comprenant au moins un résultat (RES) d'une mesure de qualité de transmission d'un premier noeud de commutation (SN10) contrôlé par la mesure de qualité de transmission à la tête de réseau (HE), une information caractérisant le premier noeud de commutation (SN10) est insérée dans le message (MSG),
- en cas de transmission du message (MSG, MSG') à la tête de réseau (HE) par au moins un second noeud de commutation (SN3, SN1), une information caractérisant l'au moins un second noeud de commutation (SN3, SN1) est insérée dans le message (MSG, MSG'),
- en cas de réception du message (MSG") dans la tête de réseau (HE), les informations caractérisant le premier noeud de commutation (SN10) et l'au moins un second noeud de commutation (SN3, SN1) sont extraites du message (MSG") et sont mémorisées sous forme de données topologiques caractérisant un chemin de réseau.

2. Procédé selon la revendication 1,
**caractérisé en ce que** les informations (SN3, SN1) caractérisant le premier noeud de commutation (SN10) et/ou l'au moins un second noeud de commutation sont insérées en un endroit défini dans le message (MSG, MSG').

3. Procédé selon l'une quelconque de la revendication 1 ou 2,
**caractérisé en ce que**, en cas d'insertion d'un nouveau noeud de commutation dans le réseau de communication, une mesure de qualité de transmission est effectuée automatiquement pour ce noeud de commutation.

4. Procédé selon l'une quelconque des revendications 1 ou 2,
**caractérisé en ce qu'**une mesure de qualité de transmission est effectuée à la demande de la tête de réseau (HE).

5. Procédé selon l'une quelconque des revendications 1 à 4,
**caractérisé en ce que** le message (MSG, MSG', MSG") est transmis par un canal retour (RCH) du réseau de communication à la tête de réseau (HE).

6. Procédé selon l'une quelconque des revendications 1 à 5,
**caractérisé en ce que** le premier noeud de commutation (SN10) et/ou l'au moins un second noeud de commutation (SN3, SN1) est/sont réalisé(s) sous forme d'un point de ramification non commuté.

7. Procédé selon l'une quelconque des revendications 1 à 6,
**caractérisé en ce que**, lors d'une mesure de qualité de transmission dans un noeud de commutation, un niveau de signal de transmission est déterminé par rapport à une valeur de consigne.

8. Procédé selon l'une quelconque des revendications 1 à 7,
**caractérisé en ce que**, lors d'une mesure de qualité de transmission, des retards de temps de propagation pour un signal de transmission sont déterminés dans un noeud de commutation.

9. Noeud de commutation pour la mise en oeuvre du procédé selon la revendication 1 comprenant
- au moins un dispositif d'intercommunication (SWU),
- au moins un dispositif de commande (CTR) pour l'au moins un dispositif d'intercommunication (SWU) et
- au moins un moyen pour l'insertion d'une information, qui
caractérise le noeud de commutation (SN1-SN10) comme un premier noeud de commutation contrôlé par une mesure de qualité de transmission et/ou comme au moins un second noeud de commutation transmettant le résultat de la mesure de qualité de transmission, dans un message (MSG, MSG') avec le résultat de la mesure de la qualité de transmission (RES).

10. Tête de réseau pour la mise en oeuvre du procédé selon la revendication 1 comprenant au moins un dispositif d'émission/réception (Tx/Rx),
- au moins un dispositif de commande (CTR) pour l'au moins un dispositif d'émission/réception (Tx/Rx),
- au moins un moyen pour l'extraction d'une information caractérisant un premier noeud de commutation (SN10) contrôlé par une mesure de qualité de transmission et une information caractérisant au moins un second noeud de commutation (SN3, SN1) transmettant le résultat de la mesure de la qualité de transmission (RES) à partir d'un message (MSG") avec le résultat de la mesure de la qualité de transmission (RES) et
- au moins un moyen (MEM, RAM) pour le stockage de l'information caractérisant le premier noeud (SN10) et l'au moins un second noeud de commutation (SN3, SN1) sous forme de données topologiques caractérisant un chemin de réseau.

11. Programme de commande pour noeud de commutation selon la revendication 9, qui peut être chargé dans une mémoire de travail du noeud de commutation et présente au moins une partie de code de logiciel, lors de d'exécution duquel,
- une information qui caractérise le noeud de commutation (SN1-SN10) comme un premier noeud de commutation contrôlé par une mesure de qualité de transmission et/ou comme au moins un second noeud de commutation transmettant le résultat de la mesure de la qualité de transmission (RES), est insérée dans un message (MSG, MSG') avec le résultat de la mesure de la qualité de transmission (RES),
lorsque le programme de commande se déroule dans un dispositif de commande (CTR) du noeud de commutation (SN1-SN10).

12. Programme de commande pour la tête de réseau selon la revendication 10, qui peut être chargé dans une mémoire de travail de la tête de réseau et présente au moins une partie de code de logiciel, lors de l'exécution duquel,
- une information caractérisant un premier noeud de commutation (SN10) contrôlé par une mesure de qualité de transmission et une information caractérisant au moins un second noeud de commutation (SN3, SN1) transmettant le résultat de la mesure de la qualité de transmission sont extraites d'un message (MSG") avec le résultat de la mesure de la qualité de transmission (RES) et
- l'information caractérisant le premier noeud de commutation (SN10) et l'au moins un second noeud de commutation (SN3, SN1) est stockée sous forme de données topologiques caractérisant un chemin de réseau,
lorsque le programme de commande se déroule dans un dispositif de commande (CTR) de la tête de réseau (HE).
